# EUROPEAN PATENT APPLICATION

(11) **EP 4 814 167 A1**
(43) Date of publication of application: **30.09.2026**
(21) Application number: 24913555.9
(22) Date of filing: 03.12.2024
(51) Int. Cl.: C25B 11/053, C25B 11/056, C25B 11/031, C25B 11/093, C25B 1/04, C25B 9/00

(54) **MEMBRANE-ELECTRODE ASSEMBLY FOR WATER ELECTROLYSIS CELL, AND WATER ELECTROLYSIS CELL COMPRISING SAME**

(30) Priority: 29.12.2023 KR 20230197614; 28.11.2024 KR 20240174103
(71) Applicant: Kolon Industries, Inc., Seoul 07793 (KR)
(72) Inventor: LEE, Ju Sung, Seoul 07793 (KR); KIM, Jun Young, Seoul 07793 (KR); KIM, Jung Ho, Seoul 07793 (KR); LIM, Youngjoon, Seoul 07793 (KR); PARK, Hyun Jin, Seoul 07793 (KR)
(74) Representative: Vossius & Partner Patentanwälte Rechtsanwälte mbB
(86) International application number: PCT/KR2024/019607
(87) International publication number: WO 2025/143612

(57) **Abstract**

The present disclosure relates to a membrane-electrode assembly for a water electrolysis cell and a water electrolysis cell comprising same, wherein the membrane-electrode assembly for a water electrolysis cell further comprises a coating layer positioned on one surface of a catalyst layer to prevent an ion conductor exposed on the surface of the catalyst layer from contacting a microporous layer, and a polymer electrolyte membrane exposed through an opening in which the catalyst layer does not exist due to low loading from contacting the microporous layer, thereby reducing a band bending phenomenon, so that a pinch-off effect can be reduced and performance can be improved. In addition, furthermore, the coating layer serves to connect catalyst layers, which are not in contact with the microporous layer, to each other, thereby enabling smooth electron movement.

## Description

### [Technical Field]

The present disclosure relates to a membrane-electrode assembly for a water electrolysis cell and a water electrolysis cell including the same, and more particularly, to a membrane-electrode assembly for a water electrolysis cell and a water electrolysis cell including the same, which further include a coating layer positioned on one surface of a catalyst layer to block contact between a polymer electrolyte membrane and a microporous layer at an interface between the catalyst layer and the microporous layer, thereby decreasing a band bending phenomenon to reduce a pinch-off effect, and accordingly improving performance.

The present disclosure relates to the result of a project (Project Unique No.: 20022451) conducted with the support of the material and component technology development program of the Ministry of Trade, Industry and Energy and the Korea Evaluation Institute of Industrial Technology (KEIT).

### [Background Art]

Recent energy demands and environments require sustainability, environmental friendliness, and high efficiency, and among them, hydrogen is receiving attention as a source of renewable energy.

Hydrogen energy is classified into gray, blue, and green hydrogen according to a production method, and gray and blue hydrogen present the problem that carbon dioxide is generated during the production process or cannot be completely removed, as these methods use fossil fuels.

Green hydrogen refers to hydrogen produced by electrolyzing limitless water, and because carbon dioxide is not generated in a process of producing hydrogen, it is in the spotlight as an ultimate eco-friendly energy source. To produce green hydrogen, water electrolysis technology is required.

Water electrolysis technology refers to an electrochemical technology that generates hydrogen and oxygen by electrolyzing water and transporting ions through a separator. Water electrolysis may be classified into two half-cell reactions, one of which is a hydrogen evolution reaction (HER) occurring at a reduction electrode, and the other of which is an oxygen evolution reaction (OER) occurring at an oxidation electrode.

Among them, in a system of a polymer electrolyte membrane water electrolysis cell (PEMWE), a membrane electrode assembly (MEA) that actually generates hydrogen has a structure in which an oxygen evolution electrode, which is an electrode at which the oxygen evolution reaction occurs, and a hydrogen evolution electrode, at which the hydrogen evolution reaction occurs, are positioned with a polymer electrolyte membrane interposed therebetween.

In addition, a microporous layer (Porous Transport Layer, PTL) and a gasket are sequentially stacked on an outer portion of the electrode, that is, an outer portion where the oxygen evolution electrode and the hydrogen evolution electrode are positioned, a separator having a flow field formed to supply water and discharge hydrogen generated by a reaction is positioned on an outer side of the microporous layer, and an end plate for supporting or fixing each of the components is coupled to the outermost side.

Non-Patent Document 0001 discloses that a pinch-off effect in which a band bending phenomenon appears occurs at an interface between an electrode and a microporous layer.

Such a pinch-off effect represents a phenomenon in which a semiconductor in mixed contact with catalyst particles of an electrode at a nanometer scale is dominated by band bending due to contact with a polymer electrolyte membrane, and it can be confirmed that as the microporous layer contacts an ion conductor more, a larger band bending occurs in the microporous layer.

In particular, when an ion conductor exposed on a surface of the catalyst layer and the microporous layer contact each other, and/or when the polymer electrolyte membrane exposed to an opening where the catalyst layer does not exist due to low loading of the catalyst layer, and the microporous layer contact each other, the pinch-off effect appears, thereby causing a problem in that performance of the membrane-electrode assembly is deteriorated.

### [Prior Art Document]

(Non-Patent Document 0001) Doo, Gisu, et al. "Contact Problems of IrO x Anodes in Polymer Electrolyte Membrane Water Electrolysis." ACS Energy Letters 8.5 (2023): 2214-2220.

### [Disclosure]

### [Technical Problem]

According to an embodiment, a membrane-electrode assembly for a water electrolysis cell is provided, which further includes a coating layer positioned on one surface of a catalyst layer to block contact between an ion conductor exposed on a surface of the catalyst layer and a microporous layer, and/or contact between a polymer electrolyte membrane exposed to an opening where the catalyst layer does not exist due to low loading of the catalyst layer and the microporous layer, thereby decreasing a band bending phenomenon to reduce a pinch-off effect and accordingly improving performance, and furthermore, the coating layer serves to connect catalyst layers not in contact with the microporous layer to each other to facilitate electron transfer.

According to another embodiment, a water electrolysis cell including the membrane-electrode assembly for a water electrolysis cell is provided.

### [Technical Solution]

A membrane-electrode assembly for a water electrolysis cell according to an embodiment includes: a polymer electrolyte membrane; an oxygen evolution electrode positioned on one surface of the polymer electrolyte membrane; and a hydrogen evolution electrode positioned on the other surface of the polymer electrolyte membrane, and the oxygen evolution electrode includes: a catalyst layer including a catalyst for an oxygen evolution reaction including active particles including a noble metal oxide, and an ion conductor; and a coating layer positioned on one surface of the catalyst layer and including a metal or a metal oxide.

A water electrolysis cell according to another embodiment comprises the membrane-electrode assembly.

### [Advantageous Effects]

According to an embodiment, a membrane-electrode assembly for a water electrolysis cell further comprises a coating layer positioned on one surface of a catalyst layer, thereby blocking an ion conductor exposed on a surface of the catalyst layer from contacting a microporous layer, or blocking a polymer electrolyte membrane exposed to an opening where the catalyst layer does not exist due to low loading of the catalyst layer from contacting the microporous layer, thereby reducing a band bending phenomenon to reduce a pinch-off effect, and accordingly, performance may be improved.

In addition, furthermore, the coating layer may serve to connect catalyst layers that are not in contact with the microporous layer to each other, thereby facilitating electron transfer.

### [Brief Description Of The Drawings]

FIG. 1 is a view schematically showing a membrane-electrode assembly (MEA) for a water electrolysis cell according to an embodiment.
FIG. 2 is an image of an upper surface of a catalyst layer taken using a scanning probe microscope (AFM) in a case of general loading and a case of low loading in Patent Document 1.
FIG. 3 is a view schematically showing preventing an ion conductor of a catalyst layer from contacting a microporous layer by a coating layer formed on a generally-loaded catalyst layer according to Example 1.
FIG. 4 is a view schematically showing preventing a polymer electrolyte membrane and an ion conductor of a catalyst layer from contacting a microporous layer by a coating layer formed on a low-loaded catalyst layer according to Example 2.
FIG. 5 is a view schematically showing an ion conductor of a generally-loaded catalyst layer according to Comparative Example 1 being exposed to and contacting a microporous layer.
FIG. 6 is a view schematically showing an ion conductor of a low-loaded catalyst layer according to Comparative Example 2 and a polymer electrolyte membrane exposed thereby in contact with a microporous layer.
FIG. 7 is a graph showing results of evaluating the I-V characteristics of the membrane-electrode assemblies manufactured in Examples 1 to 2 and Comparative Examples 1 to 2.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" means a mixture, a laminate, a composite, a copolymer, an alloy, a blend, a reaction product, etc. of constituents.

In the present specification, terms such as "include", "comprise", or "have" are intended to designate the presence of stated features, numbers, steps, components, or combination thereof, and it should be understood that they do not preclude the possibility of the presence or addition of one or more other features, numbers, steps, components, or combinations thereof.

In the present specification, the terms are used only for the purpose of distinguishing one component from another component. A singular expression includes a plural expression unless the context clearly indicates otherwise.

In the present specification, the "first surface" and the "second surface" are merely denoted as "first" and "second", respectively, to identify different surfaces, and do not indicate a priority between the surfaces.

### Membrane-electrode assembly for a water electrolysis cell

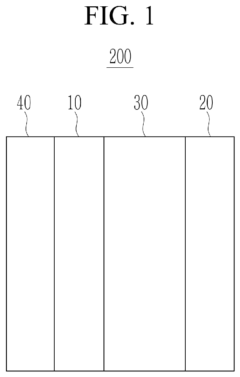

FIG. 1 is a view schematically showing a membrane-electrode assembly for a water electrolysis cell according to an embodiment. Hereinafter, the membrane-electrode assembly (200) will be described with reference to FIG. 1.

The membrane-electrode assembly (200) comprises a polymer electrolyte membrane (30), an oxygen evolution electrode (10) positioned on one surface of the polymer electrolyte membrane (30), and a hydrogen evolution electrode (20) positioned on the other surface of the polymer electrolyte membrane (30). The oxygen evolution electrode may include a catalyst layer and a coating layer positioned on one surface of the catalyst layer.

The catalyst layer has a first surface in contact with the polymer electrolyte membrane and a second surface facing the first surface, and the coating layer may be disposed on the second surface of the catalyst layer.

The catalyst layer includes a catalyst for an oxygen evolution reaction and an ion conductor, as will be described later. Such an ion conductor may be randomly arranged and positioned on a surface of a catalyst particle, and may be exposed on a surface of the catalyst layer. In this case, when a microporous layer to be described later is positioned on the second surface of the catalyst layer, the microporous layer may contact the ion conductor exposed at an interface between the microporous layer and the catalyst layer, and a pinch-off effect due to a band bending phenomenon may occur. The band bending phenomenon due to the ion conductor exposed on the catalyst layer may occur regardless of a loading amount of the catalyst layer.

According to an embodiment, a membrane-electrode assembly comprises an oxygen evolution electrode in which a coating layer is positioned on a second surface of a catalyst layer, the second surface facing a first surface in contact with a polymer electrolyte membrane, whereby the coating layer may prevent contact between an ion conductor exposed on a surface of the catalyst layer and a microporous layer.

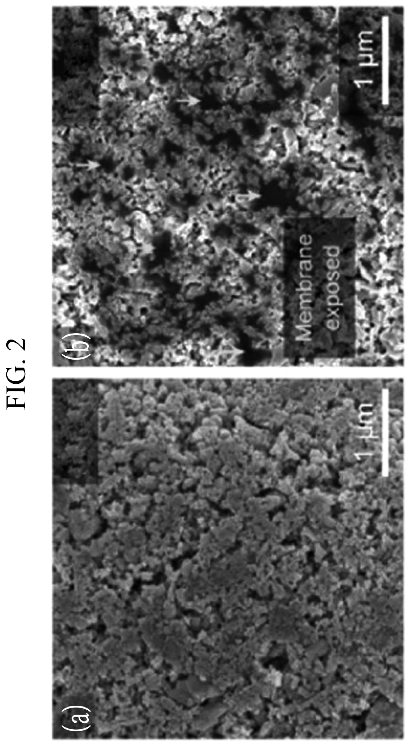

FIG. 2 is an image (a) of an upper surface of a catalyst layer taken using a scanning probe microscope (AFM) in a case of a general loading, and an image (b) of the upper surface of the catalyst layer taken using the scanning probe microscope (AFM) in a case of a low loading in Patent Document 1. Referring to FIG. 2, it may be confirmed that, when generally loaded, an area where the polymer electrolyte membrane is exposed does not exist, and when low-loaded, an area where the polymer electrolyte membrane is exposed (membrane exposed) exists (a portion indicated by ↓ in FIG. 2). According to an embodiment, the coating layer may prevent contact with an ion conductor exposed on a surface of the catalyst layer regardless of a loading amount as described above, and may also prevent contact with the polymer electrolyte membrane exposed through an opening when low-loaded as shown in FIG. 2(b). Here, the low-loaded case may mean a case where a loading amount is less than or equal to 0.² mg/cm², and the generally loaded case may mean a case where the loading amount is greater than 0.2 mg/cm² and less than 1 mg/cm².

Here, the catalyst layer refers to a region in a plane direction and a thickness direction in which the catalyst for an oxygen evolution reaction is present. The catalyst layer may exist in a continuous form on one surface of the polymer electrolyte membrane depending on a loading amount, or may exist in a discontinuous form. For example, in the case of general loading, the catalyst for an oxygen evolution reaction may be present in a continuous form on one surface of the polymer electrolyte membrane, such that there are no regions in the plane direction and thickness direction where the catalyst is absent. Conversely, in a low-loaded case, there are regions in the plane direction and thickness direction on one surface of the polymer electrolyte membrane where the catalyst for an oxygen evolution reaction is absent, in which case the catalyst layer may be present in a discontinuous form.

The catalyst layer may further have an opening exposing the polymer electrolyte membrane on the second surface. In other words, when low-loaded as described above, the catalyst layer may exist in a discontinuous form, and may have an area where the catalyst layer does not exist on one surface of the polymer electrolyte membrane, that is, an opening through which the polymer electrolyte membrane is exposed. The opening may be formed depending on a loading amount of a composition for forming a catalyst layer, and for example, it may be formed when the composition is low-loaded. In this case, the loading amount of the catalyst layer may satisfy the range of the loading amount in the low-loaded case described above. The polymer electrolyte membrane may be exposed to the second surface of the catalyst layer through the opening.

The coating layer may also be disposed on the second surface and in the opening of the catalyst layer to cover the exposed polymer electrolyte membrane. As the coating layer is disposed on the second surface and in the opening of the catalyst layer, it may block contact between the microporous layer, described later, and the polymer electrolyte membrane when the microporous layer is present on the other surface of the catalyst layer, and furthermore, when the composition for forming a catalyst layer is low-loaded, portions where the catalyst layer and the microporous layer are not in contact due to the opening may be connected to each other by the coating layer, thereby securing an electron movement path.

The area of the opening of the catalyst layer may be within a predetermined range with respect to a total area of the catalyst layer and the opening. For example, a lower limit of the area of the opening of the catalyst layer with respect to a total area of the catalyst layer may be about 0%, 5%, 10%, 15%, 20%, 25%, or 30%, and an upper limit thereof may be about 70%, 65%, 60%, 55%, 50%, 45%, 40%, 35%, or 30%.

The area of the opening of the catalyst layer may be greater than or equal to, or greater than any one of the above-described lower limits; may be less than or equal to, or less than any one of the above-described upper limits; or may have a range of greater than or equal to, or greater than any one of the above-described lower limits, and less than or equal to, or less than any one of the above-described upper limits. The area of the opening may vary depending on a loading amount of the composition for forming a catalyst layer, and when the loading amount is small, the area of the opening may increase, and when the loading amount during formation of the catalyst layer is a typical loading amount or greater, the area of the opening may decrease, or may be 0%.

Most of the area of the catalyst layer may be covered with the coating layer. The area of the catalyst layer means an area where the composition for forming a catalyst layer is applied to form the catalyst layer. For example, an area of the coating layer positioned on the catalyst layer may be in a range of 90% to 100% relative to a total area of the catalyst layer.

In addition, when the catalyst layer is low-loaded and has an opening where the catalyst layer does not exist and the polymer electrolyte membrane is exposed, most of the area of the opening may also be covered by the coating layer. For example, an area of the coating layer positioned in the opening of the catalyst layer may be in a range of 90% to 100% with respect to a total area of the opening of the catalyst layer.

That is, by positioning the coating layer with the above-described area on the catalyst layer and the opening, contact between the microporous layer to be described later and the ion conductor exposed on a surface of the catalyst layer, and contact between the microporous layer and the polymer electrolyte membrane exposed through the opening may be blocked, thereby reducing the band bending phenomenon to reduce the pinch-off effect, and improving the performance of the membrane-electrode assembly.

The oxygen evolution electrode (10) may have a first surface in contact with the polymer electrolyte membrane (30), and a second surface facing the first surface.

The membrane-electrode assembly for a water electrolysis cell may further include a microporous layer (40), and the microporous layer (40) may be positioned on the second surface of the oxygen evolution electrode (10). The microporous layer (40) serves to enhance a reactant diffusion effect.

When the membrane-electrode assembly for a water electrolysis cell further comprises the microporous layer (40), the coating layer is positioned between the catalyst layer and the microporous layer (40), and when further having the opening of the catalyst layer, the coating layer in the opening of the catalyst layer may be positioned between the polymer electrolyte membrane (30) and the microporous layer (40).

For the microporous layer (40), those known in the art may be used without limitation. For example, the microporous layer (40) may comprise a plurality of fibers. The plurality of fibers may be integrated into a non-woven fabric shape including a plurality of pores.

The plurality of fibers may include an inorganic material including carbon, silica, and the like, a polymer such as polyimide, nylon, polypropylene, and the like, a metal oxide, or a metal, which have excellent electrochemical properties and excellent heat resistance.

For example, the plurality of fibers may include a metal oxide or a metal.

For example, the plurality of fibers may include a metal including gold (Au), silver (Ag), iron (Fe), aluminum (Al), copper (Cu), stainless steel (SUS), titanium (Ti), tantalum (Ta), or a combination thereof; a metal oxide including titanium dioxide (TiO₂), tungsten oxide (WO₃), tin dioxide (SnO₂), ruthenium oxide (RuO₂), antimony tin oxide (ATO), indium tin oxide (ITO), manganese dioxide (MnO₂), molybdenum trioxide (MoO₃), or a combination thereof; or a combination thereof. For the plurality of fibers, known ones other than the listed metals or metal oxides may be used without limitation.

A diameter and a length of the plurality of fibers may be within a predetermined range. The diameter and the length of the plurality of fibers may be measured by photographing the microporous layer using a scanning electron microscope (SEM).

For example, the diameter may be in a range of 5 µm to 100 µm. In addition, the length may be in a range of 10 µm to 2 mm.

A thickness and a porosity of the microporous layer (40) may be appropriately adjusted to appropriately secure a reactant diffusion effect.

For example, the thickness of the microporous layer (40) may be within a predetermined range. The thickness of the microporous layer (40) may be measured according to a method for measuring the diameter and the length of the plurality of fibers.

The thickness of the microporous layer (40) may be in a range of 30 µm to 500 µm.

In addition, the porosity of the microporous layer (40) may be in a range of 30% to 80%. The porosity of the microporous layer (40) may be measured according to a mercury intrusion porosimetry method.

The coating layer may comprise a metal or a metal oxide that blocks contact between the microporous layer (40) and an ion conductor exposed on a surface of the catalyst layer, and between the microporous layer and the polymer electrolyte membrane (30) exposed through an opening of the catalyst layer, while not degrading functions of the polymer electrolyte membrane (30) and the catalyst layer. As the metal, a metal having high electrical conductivity and high corrosion resistance may be used. For example, the metal may include Ir, Au, Pt, Ru, Al, Mo, W, Ta, Rh, Re, Cu, or a combination thereof. The metal oxide may include indium tin oxide (ITO).

The coating layer may be in a continuous form or a discontinuous form, and the coating layer may have an uneven shape along the shape of the catalyst particles on the surface of the catalyst layer.

The coating layer may be formed relatively thin, and a thickness of the coating layer may be significantly thinner than a thickness of the catalyst layer.

For example, a lower limit of the thickness of the catalyst layer may be about 3 µm, 3.5 µm, 4 µm, 4.5 µm, or 5 µm, and an upper limit thereof may be about 25 µm, 20 µm, 15 µm, 10 µm, 9 µm, 8 µm, 7 µm, 6 µm, or 5 µm. The catalyst layer may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits, and less than or equal to, or less than any one upper limit among the above-described upper limits.

In addition, a lower limit of the thickness of the coating layer may be about 3 nm, 4 nm, 5 nm, 6 nm, 7 nm, 8 nm, 9 nm, 10 nm, 11 nm, 12 nm, 13 nm, 14 nm, 15 nm, 16 nm, 17 nm, 18 nm, 19 nm, or 20 nm, and an upper limit thereof may be about 1000 nm, 900 nm, 800 nm, 700 nm, 600 nm, 500 nm, 400 nm, 300 nm, 200 nm, 100 nm, 90 nm, 80 nm, 70 nm, 60 nm, or 50 nm. The coating layer may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits, and less than or equal to, or less than any one upper limit among the above-described upper limits.

By the catalyst layer and the coating layer having thicknesses within the range, contact between the microporous layer (40) and the ion conductor exposed on a surface of the catalyst layer, and contact between the microporous layer (40) and the polymer electrolyte membrane (30) exposed through the opening may be blocked, and accordingly, band bending may be reduced to reduce a pinch-off effect, thereby improving the performance of the membrane-electrode assembly.

The coating layer may be thin and simultaneously densely formed. Here, that the coating layer is dense may mean that the coating layer has almost no pores or no pores exist therein, and may be expressed by the porosity of the coating layer. For example, the porosity of the coating layer may be less than 10%, for example, less than or equal to 5%, less than or equal to 2.5%, less than or equal to 1%, or 0%. The porosity of the coating layer may be measured according to mercury intrusion porosimetry.

In addition, a density of the coating layer may be from 1 g/cm² to 30 g/cm², from 1.5 g/cm² to 28 g/cm², from 2 g/cm² to 26 g/cm², or from 2.5 g/cm² to 24 g/cm². Since the coating layer has almost no pores or no pores existing therein, the density of the coating layer may be the same as a theoretical density of the metal or the metal oxide included in the coating layer.

When the porosity and the density of the coating layer satisfy the ranges, electrical conductivity may be excellent, and electron transfer may be facilitated.

The coating layer may be manufactured according to a known method, and for example, may be formed by a sputtering method or a spray method. When manufactured according to the sputtering method or the spray method, a coating layer having a relatively thin thickness and simultaneously being dense may be formed.

Hereinafter, the oxygen evolution electrode, the hydrogen evolution electrode, and the polymer electrolyte membrane will be described.

The catalyst layer included in the oxygen evolution electrode comprises the catalyst for an oxygen evolution reaction and the ion conductor, and the catalyst for an oxygen evolution reaction comprises the active particles comprising the noble metal oxide.

The catalyst layer included in the oxygen evolution electrode may comprise pores formed by the catalyst for an oxygen evolution reaction, and the ion conductor may randomly exist on a surface of the catalyst for an oxygen evolution reaction and in the catalyst layer. That is, the catalyst layer included in the oxygen evolution electrode may have a porous structure, and a porosity of the catalyst layer may be 30% to 60%, for example, 32% to 55%, 32% to 50%, 32% to 47%, or 35% to 47%. The porosity in the catalyst layer may be measured according to a mercury intrusion method. When the porosity in the catalyst layer satisfies the range, it may assist in transfer of a reactant (H₂O) and removal of a product (O₂) to improve polymer electrolyte membrane water electrolysis performance, and optimal electrical conductivity may be secured. As described above, the coating layer according to an embodiment may be positioned on a surface of the catalyst layer while hardly affecting the porosity of the catalyst layer to prevent contact between the microporous layer and the ion conductor exposed on a surface of the catalyst layer, and contact between the microporous layer and the polymer electrolyte membrane, and accordingly, the performance of the membrane-electrode assembly may be improved.

The noble metal oxide is not limited in type as long as it may be commonly applied to a catalyst for an oxygen evolution reaction of a water electrolysis cell.

For example, the noble metal oxide may include IrOₓ (wherein x is an integer of 1 to 3), RuOₓ (wherein x is an integer of 1 to 3), IrMOₓ (wherein M includes Ru, Sn, Ti, Te, Ta, Nb, Sb, Se, W, or a combination thereof, and x is an integer of 1 to 3), or a combination thereof.

The catalyst for an oxygen evolution reaction may use only the active particles alone, or may further include a support supporting the active particles.

The type of the support is not particularly limited as long as it may be applied to a catalyst for an oxygen evolution reaction of a water electrolysis cell.

For example, the support may be a metal oxide, and the support may be titanium dioxide (TiO₂).

The ion conductor is included to improve the adhesion of the catalyst layer and to facilitate the transfer of hydrogen ions.

The ion conductor may include a cation exchange group to secure ion conductivity.

The cation exchange group may be a sulfonic acid group, a carboxyl group, a boronic acid group, a phosphoric acid group, a phosphonic acid group, an imide group, a sulfonimide group, a sulfonamide group, or a sulfonic acid fluoride.

The ion conductor may be a fluorine-based ion conductor, a hydrocarbon-based ion conductor, or a mixture thereof.

The fluorine-based ion conductor may be a fluorine-based polymer having the cation exchange group in a side chain and containing fluorine in a main chain, for example, poly(perfluorosulfonic acid), poly(perfluorocarboxylic acid), or the like.

The hydrocarbon-based ion conductor may be a hydrocarbon-based polymer having the cation exchange group in a side chain [for example, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, or the like].

According to an embodiment, the ion conductor may have hydrogen ion conductivity.

In the ion conductor having hydrogen ion conductivity, H in the cation exchange group at a side chain terminal may be substituted with Na, K, Li, Cs, or tetrabutylammonium. When substituting H with Na in the ion exchange group at the end of the side chain, NaOH is used for substitution during the preparation of a catalyst composition, when substituting with tetrabutylammonium, tetrabutylammonium hydroxide is used for substitution, and K, Li, or Cs may also be substituted using an appropriate compound. Since this substitution method is widely known in the art, a detailed description thereof will be omitted herein.

A content of the ion conductor may be appropriately adjusted as necessary.

For example, a lower limit of the content of the ion conductor with respect to 100 parts by weight of the catalyst for an oxygen evolution reaction may be about 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, or 20 parts by weight, and an upper limit thereof may be about 100 parts by weight, 90 parts by weight, 80 parts by weight, 70 parts by weight, 60 parts by weight, 50 parts by weight, 40 parts by weight, 30 parts by weight, or 20 parts by weight.

The ion conductor may be greater than or equal to, or greater than any one of the lower limits described above; less than or equal to, or less than any one of the upper limits described above; or have a range of greater than or equal to, or greater than any one of the lower limits described above and less than or equal to, or less than any one of the upper limits described above, based on 100 parts by weight of the catalyst for an oxygen evolution reaction. When the ion conductor is contained within the range, performance and durability are excellent.

The ion conductor may be used in the form of a single material or a mixture, and may also be optionally used together with a non-conductive compound for the purpose of further improving adhesion to the polymer electrolyte membrane. A content of the non-conductive compound may be appropriately adjusted depending on the purpose of use.

As the non-conductive compound, at least one selected from polytetrafluoroethylene (PTFE), tetrafluoroethylene-hexafluoropropylene copolymer (FEP), tetrafluoroethylene-perfluoroalkyl vinyl ether copolymer (PFA), ethylene/tetrafluoroethylene (ethylene/tetrafluoroethylene (ETFE)), ethylene chlorotrifluoroethylene copolymer (ECTFE), polyvinylidene fluoride, a copolymer of polyvinylidene fluoride-hexafluoropropylene (PVdF-HFP), dodecylbenzenesulfonic acid, and sorbitol may be used.

The hydrogen evolution electrode may include a catalyst for a hydrogen evolution reaction. The catalyst for a hydrogen evolution reaction may include active particles and a support.

The active particles may include a noble metal.

For example, the noble metal may be a platinum-based noble metal.

As the platinum-based noble metal (platinum based precious metal), platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The support may be a carbon-based support.

The carbon-based support may be graphite, super P, carbon fiber, carbon sheet, carbon black, Ketjen Black, Denka black, acetylene black, carbon nano tube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The oxygen evolution electrode and the hydrogen evolution electrode may respectively include only a catalyst layer including a catalyst for an oxygen evolution reaction and a catalyst for a hydrogen evolution reaction, but may include an electrode substrate together with the catalyst layer.

In this case, the electrode substrate may serve to support the electrode while diffusing a fuel and an oxidant to the catalyst layer.

As the electrode substrate, a known electrode substrate may be used without specific limitation, but specifically, the electrode substrate may be a conductive substrate, such as carbon paper, carbon cloth, carbon felt, or metal cloth (referring to a porous film composed of metal fibers or a cloth formed of polymer fibers having a metal film formed on a surface thereof).

The electrode substrate may be water-repellent treated with a fluorine-based resin, in which case it is possible to prevent reactant diffusion efficiency from being degraded by water generated during driving of the water electrolysis cell.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

The polymer electrolyte membrane has an ion exchange function of transporting hydrogen ions generated in the oxygen evolution electrode to the catalyst for a hydrogen evolution reaction.

According to an embodiment, a polymer electrolyte membrane may comprise a porous support including a plurality of pores, and an ion conductor filling the pores of the porous support.

The porous support may be a fluorine-based support or a nano-web support.

For example, the fluorine-based support may correspond to expanded polytetrafluoroethylene (e-PTFE) having a microstructure of polymer fibrils, or a microstructure in which nodes are connected to each other by fibrils. In addition, a film having a microstructure of polymer fibrils in which the nodes do not exist may also be used as the porous support.

The nano-web support may be a support in which nanofibers are integrated into a non-woven fabric shape including a plurality of pores.

The ion conductor is as described above.

The ion conductor included in the polymer electrolyte membrane may be the same as or different from the ion conductor included in the oxygen evolution electrode, and for example, the ion conductor included in the polymer electrolyte membrane may be the same as the ion conductor included in the oxygen evolution electrode.

### Water electrolysis cell

According to an embodiment, a water electrolysis cell may comprise the membrane-electrode assembly.

Since the water electrolysis cell is the same as a known one except for comprising the membrane-electrode assembly according to the present application, a detailed description thereof will be omitted.

### [Mode for Invention]

Hereinafter, examples will be described in detail so that those of ordinary skill in the art to which the present invention pertains may easily carry out the present invention. However, the present invention may be implemented in various different forms and is not limited to the examples described herein.

### Example 1

A composition for forming a catalyst layer for an oxygen evolution electrode was prepared by mixing a commercial IrOₓ black powder (Merck Sigma-Aldrich, Iridium(IV) oxide 206237) and Nafion as an ion conductor in normal propyl alcohol (nPA) as a solvent to have a weight ratio of 1:0.2 (IrOₓ:Nafion), and adding the solvent to have a solid content of 5 wt%.

A catalyst layer was formed by spray-coating the composition for forming a catalyst layer for an oxygen evolution electrode onto a coating base film (PI Advanced Materials, PI film) having a width of 2 cm, a length of 2 cm, an active area of 4 cm², and a thickness of about 200 µm such that a loading amount was 0.5 mg/cm². At this time, the thickness of the catalyst layer was about 5 µm, and the porosity of the catalyst layer was 35%. At this time, the catalyst layer does not have an opening through which the polymer electrolyte membrane is exposed.

A composition for forming a catalyst layer for a hydrogen evolution electrode was prepared by mixing Pt/C having a Pt loading of 50 wt% and Nafion as an ion conductor such that a weight ratio of the carbon of the Pt/C to the Nafion is 1:1.2, and adding the solvent such that a solid content is 5 wt%. A hydrogen evolution electrode having a thickness of about 30 µm was formed by spray-coating the composition for forming a catalyst layer for a hydrogen evolution electrode onto a coating base film (PI Advanced Materials, PI film) having a width of 2 cm, a length of 2 cm, and a thickness of about 200 µm such that a loading amount was 0.5 mg/cm².

A membrane-electrode assembly was manufactured by sequentially stacking the oxygen evolution electrode, a commercial NR212 from Chemours having a thickness of about 50.8 µm as a polymer electrolyte membrane, and the hydrogen evolution electrode, hot-pressing them at 5N at a temperature of 150°C for 5 minutes, and then removing the coating base film.

A coating layer was formed on the catalyst layer of the oxygen evolution electrode using a radio frequency (RF) magnetron sputtering machine VPA 21 of Aurion Anlagentechnik. Specifically, after initially evacuating to a pressure of 5.0×10⁻³ Pa to prevent contamination due to remaining gas, a borosilicate glass cover slip D263 of Duran Group having a width of 50 mm, a length of 50 mm, and a thickness of about 0.145 mm was used as a substrate. The membrane-electrode assembly was fixed on the substrate, and a circular planar iridium target having a purity of 99.9% was used, wherein the target was positioned such that a distance between the target and the substrate was 120 mm, and an inclination angle thereof was 40°. During deposition, the gas pressure was maintained at 0.25 Pa under an argon gas flow rate of 50 sccm, and R.F. power was performed at 6W at 300 inches, deposition was performed for about 2.8 minutes at a deposition rate of 7 nm/min to have a thickness of 20 nm, and the substrate was rotated at 8 rpm, thereby forming a dense coating layer having a thickness of 20 nm and a porosity of 0% on the catalyst layer of the oxygen evolution electrode.

A microporous layer of Currento^{®} PTL Ti-68/350 from Bekaert was stacked on the oxygen evolution electrode on which the coating layer was formed to manufacture a final membrane-electrode assembly. The microporous layer has a non-woven fabric form in which a plurality of fibers consisting of titanium are integrated, the porosity of the microporous layer was about 68%, and the thickness thereof was 350 µm.

### Example 2

A membrane-electrode assembly was manufactured in substantially the same manner as in Example 1, except that the catalyst layer was formed such that the loading amount of the catalyst layer was 0.1 mg/cm² during the manufacture of the oxygen evolution electrode of Example 1.

At this time, the thickness of the catalyst layer of the oxygen evolution electrode was about 1.5 µm, the area of the opening of the oxygen evolution electrode was about 30% with respect to a total area of the catalyst layer and the opening (the same as the active area), and the porosity of the catalyst layer of the oxygen evolution electrode was 47%.

### Comparative Example 1

A membrane-electrode assembly was manufactured in substantially the same manner as in Example 1, except that a coating layer was not formed during the manufacture of the oxygen evolution electrode of Example 1.

At this time, the oxygen evolution electrode included only a catalyst layer having a thickness of about 5 µm on one surface of a polymer electrolyte membrane (Chemours, NR212) having a thickness of about 50.8 µm, and the porosity of the catalyst layer of the oxygen evolution electrode was 35%.

### Comparative Example 2

A membrane-electrode assembly was manufactured in substantially the same manner as in Comparative Example 1, except that the catalyst layer was formed such that a loading amount of the catalyst layer was 0.1 mg/cm² in the manufacture of the oxygen evolution electrode of Comparative Example 1.

At this time, a thickness of the catalyst layer of the oxygen evolution electrode was about 1.5 µm, an area of the opening of the oxygen evolution electrode was about 30% with respect to a total area of the catalyst layer and the opening (the same as the active area), and a porosity of the catalyst layer of the oxygen evolution electrode was 47%.

### Evaluation Example 1. I-V characteristics

The membrane-electrode assemblies for a water electrolysis cell according to Examples 1 to 2 and Comparative Examples 1 to 2 were applied to the inside of a unit cell designed and manufactured for a water electrolysis cell, and were measured by applying a protocol for measuring a voltage and a resistance at a specific current from 1 mA to 200 A under conditions of a cell temperature of 80°C, a water temperature of 80°C, and a flow rate of 5 ml/min, and the measurement was stopped at 2 V.

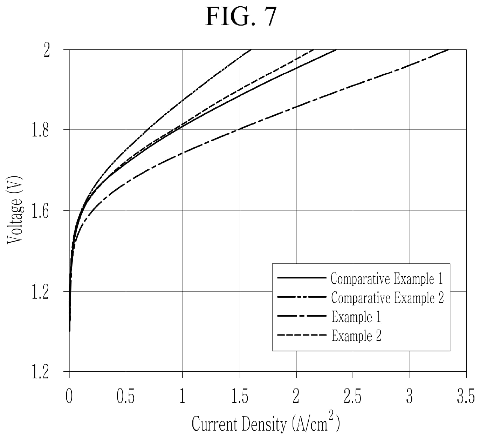

The results at this time are as shown in FIG. 7.

### Conclusion

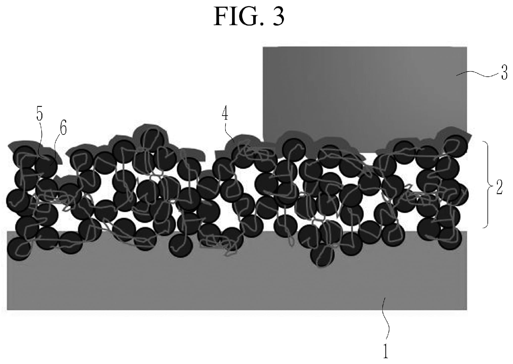

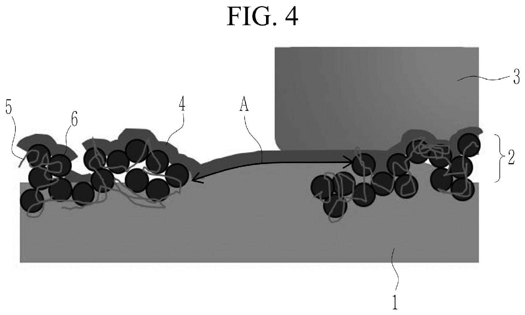

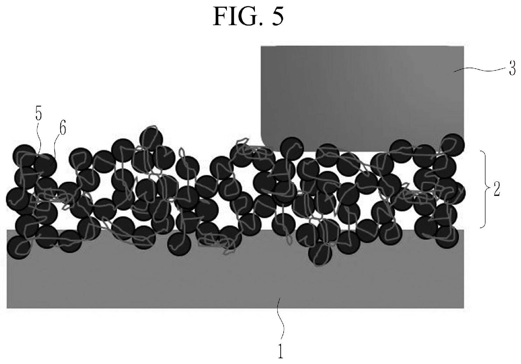

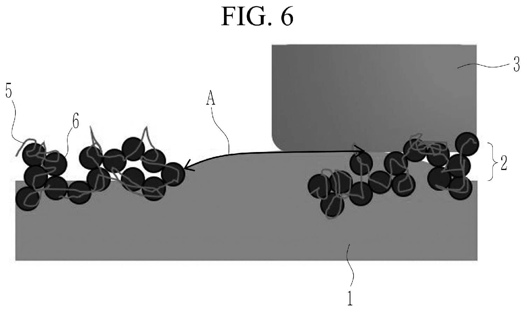

FIGS. 3 to 6 are views schematically illustrating the polymer electrolyte membrane (1)-catalyst layer (2)-microporous layer (3) in the membrane-electrode assemblies according to Examples 1 to 2 and Comparative Examples 1 to 2. Referring to FIGS. 3 to 6, unlike the catalyst layers (2) of Example 2 and Comparative Example 2 in which the catalyst layers were formed by being loaded in a relatively small amount, the catalyst layers (2) of Example 1 and Comparative Example 1 in which the catalyst layers were formed with a general loading amount do not have a portion where the polymer electrolyte membrane is exposed, that is, an opening A. In Example 1 and Comparative Example 1, the polymer electrolyte membrane (1) and the microporous layer (3) may have a low probability of contacting each other. Meanwhile, since the ion conductor (5) exposed on the surface of the catalyst layer exists regardless of the loading amount of the catalyst layer, in Examples 1 to 2 and Comparative Examples 1 to 2, the ion conductor (5) exposed on the surface of the catalyst layer (2) contacts the microporous layer (3). In Example 1, unlike Comparative Example 1, the coating layer (4) is formed on the catalyst layer to suppress contact between the ion conductor (5) exposed on the surface of the catalyst layer and the microporous layer (3), and in Example 2, unlike Comparative Example 2, the coating layer (5) is formed on the catalyst layer and the opening to suppress contact between the ion conductor (5) exposed on the surface of the catalyst layer and the microporous layer (3) as well as contact between the polymer electrolyte membrane (1) exposed through the opening and the microporous layer (3), and furthermore, the coating layer (4) may serve to connect catalyst layers not in contact with the microporous layer (3) to each other, thereby facilitating electron transfer. Here, since the microporous layer is formed of a non-woven fabric, when enlarged, it should be understood as a highly enlarged view of one fiber constituting the non-woven fabric. In addition, the coating layer (4) may be formed relatively thin and dense as illustrated in FIGS. 3 and 4, and thus may be formed unevenly according to a shape of particles of the catalyst for an oxygen evolution reaction (6) positioned on the surface of the catalyst layer.

This will be described in more detail with reference to FIG. 7. Referring to FIG. 7, when the loading amount is based on 0.5 mg/cm², it may be confirmed that the membrane-electrode assembly of Example 1 including the oxygen evolution electrode having the coating layer formed on the catalyst layer exhibits a high current density at the same voltage compared to the membrane-electrode assembly of Comparative Example 1 including the oxygen evolution electrode not including the coating layer, and thus the performance is improved.

Meanwhile, when the loading amount is based on 0.1 mg/cm², it is confirmed that the membrane-electrode assembly of Example 2 including the oxygen evolution electrode having the coating layer formed on the catalyst layer exhibits a higher current density at the same voltage compared to the membrane-electrode assembly of Comparative Example 2 including the oxygen evolution electrode not including the coating layer, and thus the performance is improved.

This appears to be because a relatively thin and dense coating layer is formed on the catalyst layer, which may prevent contact between the ion conductor exposed on the surface of the catalyst layer and the microporous layer, and when the catalyst layer has an opening, prevent contact between the polymer electrolyte membrane exposed through the opening and the microporous layer, consequently, a high current density may be exhibited at the same voltage, thereby improving the performance.

In addition, a coating layer according to an embodiment may be relatively thin and dense, and thus, when formed on the catalyst layer, the coating layer is formed unevenly along the catalyst particles positioned on the surface of the catalyst layer and does not affect pores inside the catalyst layer, thereby simultaneously contributing to performance improvement without increasing mass transfer resistance of the catalyst layer.

Although the preferred embodiment has been described in detail above, the scope of rights is not limited thereto, and various modifications and improvements made by those skilled in the art using the basic concept defined in the following claims also fall within the scope of rights.

### <Description of symbols>

200: membrane-electrode assembly for a water electrolysis cell
10: oxygen evolution electrode
20: hydrogen evolution electrode
30: polymer electrolyte membrane
40: microporous layer
1: polymer electrolyte membrane
2: catalyst layer
3: microporous layer
4: coating layer
5: ion conductor
6: catalyst for an oxygen evolution reaction
A: opening

## Claims

1. A membrane-electrode assembly for a water electrolysis cell comprising:
a polymer electrolyte membrane;
an oxygen evolution electrode positioned on one surface of the polymer electrolyte membrane; and
a hydrogen evolution electrode positioned on the other surface of the polymer electrolyte membrane,
wherein the oxygen evolution electrode comprises:
a catalyst layer comprising a catalyst for an oxygen evolution reaction including active particles containing a noble metal oxide, and an ion conductor; and
a coating layer positioned on one surface of the catalyst layer and containing a metal or a metal oxide.

2. The membrane-electrode assembly for a water electrolysis cell of claim 1, wherein:
the catalyst layer has a first surface in contact with the polymer electrolyte membrane, and a second surface facing the first surface, and
the coating layer is disposed on the second surface of the catalyst layer.

3. The membrane-electrode assembly for a water electrolysis cell of claim 2, wherein:
the catalyst layer further comprises an opening exposing the polymer electrolyte membrane on the second surface, and
the coating layer is also disposed in the opening to cover the exposed polymer electrolyte membrane.

4. The membrane-electrode assembly for a water electrolysis cell of claim 3, wherein:
an area of the coating layer positioned on the catalyst layer is in a range of 90% to 100% relative to a total area of the catalyst layer, and
an area of the coating layer positioned in the opening of the catalyst layer is in a range of 90% to 100% relative to a total area of the opening of the catalyst layer.

5. The membrane-electrode assembly for a water electrolysis cell of claim 3, wherein:
the oxygen evolution electrode has a first surface in contact with the polymer electrolyte membrane, and a second surface facing the first surface, and
the membrane-electrode assembly for a water electrolysis cell further comprises a microporous layer positioned on the second surface of the oxygen evolution electrode.

6. The membrane-electrode assembly for a water electrolysis cell of claim 5, wherein:
the coating layer is positioned between the catalyst layer and the microporous layer, and
in the opening of the catalyst layer, the coating layer is positioned between the polymer electrolyte membrane and the microporous layer.

7. The membrane-electrode assembly for a water electrolysis cell of claim 5, wherein:
the microporous layer comprises a plurality of fibers integrated into a non-woven fabric form comprising a plurality of pores, and
the plurality of fibers comprise a metal including gold (Au), silver (Ag), iron (Fe), aluminum (Al), copper (Cu), stainless steel (SUS), titanium (Ti), tantalum (Ta), or a combination thereof; a metal oxide including titanium dioxide (TiO₂), tungsten oxide (WO₃), tin dioxide (SnO₂), ruthenium oxide (RuO₂), antimony tin oxide (ATO), indium tin oxide (ITO), manganese dioxide (MnO₂), molybdenum trioxide (MoO₃), or a combination thereof; or a combination thereof.

8. The membrane-electrode assembly for a water electrolysis cell of claim 5, wherein:
a diameter of the plurality of fibers is in a range of 5 µm to 100 µm, and a length thereof is in a range of 10 µm to 2 mm.

9. The membrane-electrode assembly for a water electrolysis cell of claim 5, wherein:
a thickness of the microporous layer is in a range of 30 µm to 500 µm.

10. The membrane-electrode assembly for a water electrolysis cell of claim 5, wherein:
a porosity of the microporous layer is in a range of 30% to 80%.

11. The membrane-electrode assembly for a water electrolysis cell of claim 1, wherein:
the metal includes Ir, Au, Pt, Ru, Al, Mo, W, Ta, Rh, Re, Cu, or a combination thereof, and
the metal oxide includes indium tin oxide (ITO).

12. The membrane-electrode assembly for a water electrolysis cell of claim 1, wherein:
the coating layer is in a continuous form or a discontinuous form.

13. The membrane-electrode assembly for a water electrolysis cell of claim 1, wherein:
a porosity of the coating layer is less than 10%, and
a density of the coating layer is 1 g/cm² to 30 g/cm².

14. The membrane-electrode assembly for a water electrolysis cell of claim 1, wherein:
a thickness of the catalyst layer is in a range of 3 µm to 25 µm, and
a thickness of the coating layer is in a range of 3 nm to 1000 nm.

15. The membrane-electrode assembly for a water electrolysis cell of claim 1, wherein:
the noble metal oxide includes IrOₓ (wherein x is an integer of 1 to 3), RuOₓ (wherein x is an integer of 1 to 3), IrMOₓ (wherein M includes Ru, Sn, Ti, Te, Ta, Nb, Sb, Se, W, or a combination thereof, and x is an integer of 1 to 3), or a combination thereof.

16. The membrane-electrode assembly for a water electrolysis cell of claim 1, wherein:
the catalyst for an oxygen evolution reaction further comprises a support supporting the active particles, and
the support is titanium dioxide (TiO₂).

17. The membrane-electrode assembly for a water electrolysis cell of claim 1, wherein:
the ion conductor is included in the catalyst layer in an amount of greater than or equal to 5 wt%.

18. The membrane-electrode assembly for a water electrolysis cell of claim 1, wherein:
the hydrogen evolution electrode comprises:
a carbon-based support, and active particles supported on the carbon-based support and comprising a noble metal.

19. The membrane-electrode assembly for a water electrolysis cell of claim 1, wherein:
the polymer electrolyte membrane comprises a porous support including a plurality of pores, and an ion conductor filling the pores of the porous support.

20. A water electrolysis cell comprising the membrane-electrode assembly according to claim 1.
